Europäisches Patentamt

European Patent Office

Office européen des brevets

(19)

(11) Veröffentlichungsnummer: **0 189 860**
**B1**

(12) **EUROPÄISCHE PATENTSCHRIFT**

(45) Veröffentlichungstag der Patentschrift: **13.06.90**

(51) Int. Cl.⁵: **H 04 N 7/137**

(21) Anmeldenummer: **86100924.9**

(22) Anmeldetag: **23.01.86**

(54) **Verfahren zur Bildfehlerkorrektur.**

(30) Priorität: **24.01.85 DE 3502317**

(43) Veröffentlichungstag der Anmeldung:
**06.08.86 Patentblatt 86/32**

(45) Bekanntmachung des Hinweises auf die
Patenterteilung:
**13.06.90 Patentblatt 90/24**

(84) Benannte Vertragsstaaten:
**AT BE CH DE FR GB IT LI NL SE**

(56) Entgegenhaltungen:
**10. JAHRESTAGUNG DER FKTG, München, 13. -
17. September 1982, Seiten 526-548, FKTG,
Mainz, DE; D. WESTERKAMP et al.: "Digitale
Magnetbandaufzeichnung von Video- und
Audiosignalen auf einem
Videocassettenrecorder"
IEEE TRANSACTIONS ON COMMUNICATIONS,
Band COM-21, Nr. 6, Juni 1973, Seiten 695-706,
IEEE, New York, US; D.J. CONNOR: "Techniques
for reducing the visibility of transmission errors
in digitally encoded video signals"**

(73) Patentinhaber: **Siemens Aktiengesellschaft
Wittelsbacherplatz 2
D-8000 München 2 (DE)**

(72) Erfinder: **Strehl, Herbert, Dipl.-Ing.
Drozzaweg 1
D-8000 München 70 (DE)**

Courier Press, Leamington Spa, England.

## Beschreibung

Die Erfindung betrifft ein Verfahren zur Korrektur von Bildfehlern bei der Übertragung von DPCM-codierten Bildsignalen.

Bei der Übertragung von Bildsignalen sind zwei prinzipielle Methoden zur Korrektur von Bildfehlern bekannt. Bei der ersten Methode werden fehlerkorrigierende Codes zur Verringerung von Übertragungsfehlern eingesetzt. Diese benötigen jedoch einen Anteil von über 5% der Übertragungskapazität. Bei der anderen Methode wird die sogenannte Bildfehlerverdeckung angewendet. Hierzu muß ein Übertragungsfehler nur erkannt werden und die gestörten Bildsignalwerte werden durch die Korrekturwerte ersetzt, die einem vorangegangenen Fernsehbild entnommen wurden oder durch die Interpolation aus den umliegenden Bildsignalwerten gewonnen werden.

Erfolgt die Übertragung von Bildsignalen mit Hilfe der Differenz-Pulscode-Modulation (DPCM), so bewirkt die Störung eines einzigen DPCM-Wertes bereits eine sogenannte Fehlerschleppe, die das Fernsehbild wesentlich stärker stört als einzelne fehlerhafte Bildsignalwerte bei einer PCM-Codierung (PCM=Pulscode-Modulation).

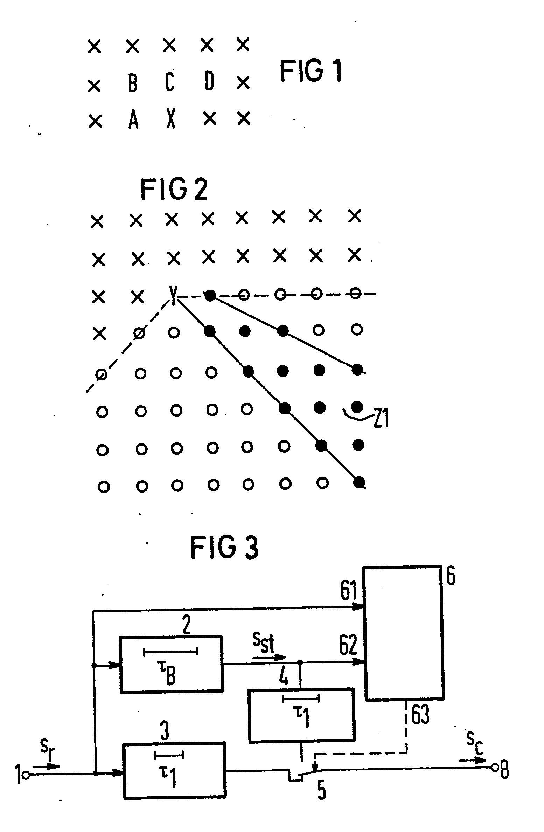

In IEEE Transactions on Communications, Vol. Com-21, No. 6, June 1973, Seiten 695 bis 706 sind in einem Aufsatz von Denis J. Conner verschiedene Techniken zur Reduzierung der Sichtbarkeit von Fehlern in Bildern bei der Übertragung DPCM-codierter Videosignale beschrieben. Neben einer heute nicht mehr üblichen eindimensionalen DPCM-Codierung mit einem Prädiktionsfaktor von 1 beschäftigt sich dieser Aufsatz bereits mit der heute üblichen mehrdimensionalen Prädiktion und gibt in Figur 3 bereits Darstellungen von Fehlermustern aufgrund von Störungen einzelner DPCM-Signalwerte an. Zur Verringerung der Sichtbarkeit von Fehlerschleppen wird eine spezielle Prädiktion vorgeschlagen, bei der die Anzahl der Fehlerschleppen bei einer gegebenen Fehlerrate halbiert wird.

Als zweite Möglichkeit wird eine Verringerung der Störungen durch einen Leak-Prädiktor vorgeschlagen.

Als dritte Möglichkeit (Seite 698, Spalte 1, zweiter Absatz) wird eine zeilenweise Korrektur vorgeschlagen. Eine Fehlererkennung erfolgt durch Paritätsbits. Dies Prinzip kann jedoch nur in einem entsprechend modifizierten Übertragungsverfahren eingeführt werden. Die gestörten Zeilen werden vollständig durch zwischengespeicherter Zeilen eines vorangegangenen Bildes oder mittels Interpolation gewonnene Werte desselben Halbbildes ersetzt. Außerdem erfolgt eine Korrektur zeilenweise. In unbewegten Bildteilen können zwischengespeicherte Bildsugnalwerte, in bewegten Bildteilen dagegen durch Interpolation von angrenzenden Bildsignalwerten gewonnene Korrekturwerte verwendet werden.

Ein Hinweis, daß eine Fehlerschleppenerkennung bei mehrdimensionaler Prädiktion durchgeführt wird und ein besseres Bild durch gezielte Korrektur von gestörten Bildsignalen erreicht werden kann, ist diesem Aufsatz nicht zu entnehmen.

Es ist die Aufgabe dieser Erfindung, ein verbesserts redundanzfreies Verfahren zur Korrektur von Bildfehlern bei DPCM-codierten Bildsignalen anzugeben.

Diese Aufgabe wird durch die in den Patentansprüchen 1 und 7 angegebenen Merkmale gelöst.

Vorteilhafte Ausbildungen sind in den Unteransprüchen angegeben.

Die Erfindung beruht auf der Erkenntnis, daß abhängig vom Prädiktionsalgorithmus bei einem Übertragungsfehler die erzeugte Fehlerschleppe eine bestimmt geometrische Struktur aufweist, wobei auch die Größe der Fehler der einzelnen Bildsignalwerte vom Prädiktionsalgorithmus bestimmt wird. Die typische Fehlerstruktur wird aufgrund eines Vergleichs mit dem zuletzt empfangenen Fernsehbild ermittelt. Bei dem überlichen Halbbildverfahren kann der Vergleich mit dem entsprechenden Halbbild des letzten Fernsehbildes durchgeführt werden oder—mit geringfügigen Abstrichen—auch ein Vergleich mit dem zuletzt empfangenen Halbbild durchgeführt werden. Bei einer erkannten Störung werden die gestörten Bildsignalwerte durch die zwischengespeicherten Bildsignalwerte ersetzt. Es können, besonders beim Halbbildverfahren, auch Korrekturwerte verwendet werden, die durch Interpolation der Bildsignalwerte zweier aufeinanderfolgender Zeilen gewonnen und zwischengespeichert wurden.

Die Fehlerschleppenerkennung und Korrektur kann selbstverständlich auch vor der Rückumsetzung in PCM-Signalwerte, die ka einem durch den Prädiktionsalgorithmus beschriebenen Integrationsverfahren gleicht, durch einen Vergleich der DPCM-Signalwerte und durch die Korrektur des gestörten DPCM-Signalwertes erfolgen. Dies Verfahren bedingt einen geringeren Schaltungsaufwand.

Anhand der Figuren 1 bis 6 wird das Verfahren näher erläutert.

Es zeigen
Fig. 1 einen Ausschnitt aus einem Fernsehbild,
Fig. 2 die prinzipielle Struktur einer Fehlerschleppe,
Fig. 3 das Prinzipschaltbild einer Korrekturvorrichtung,
Fig. 4 eine Schaltungsvariante zu diesem Prinzipschaltbild,
Fig. 5 eine Prinzipschaltbild einer Fehlerschleppenerkennung und
Fig. 6 eine Korrekturvorrichtung für DPCM-Signalwerte.

In Fig. 1 ist ein Ausschnitt aus einem Fernsehbild dargestellt. Die einzelnen Kreuze x und Buchstaben entsprechen jeweils einem Bildsignalwert. Bei der Codierung wird bekanntermaßen aus den einen aktuellen Bildsignalwert X umgebenden Signalwerten, hier A, B, C, und D ein Vorhersagewert

$$\hat{x}=a\times A+b\times B+c\times C+d\times D$$

ermittelt, der mit dem aktuellen Bildsignalwert X verglichen wird. Die Differenz wird anschließend als DPCM-Signalwert Δs ausgesendet. Auf der Empfangsseite werden durch eine entsprechende Prozedur wiederum die PCM-Signalwete aus den bereits rekonstruierten Signalwerten $A_r$, $B_r$, $C_r$ und $D_r$ und dem entsprechenden DPCM-Signalwert Δs ermittelt.

Wie in Fig. 2 dargestellt, kommt es bei Verfählschung eines oder mehrerer der höherwertigen Bits eines DPCM-Signalwertes Δs zu einer Fehlerschleppe Z1, deren Grenzen bei dem vorstehend angegebenen Prädiktionsalgorithmus—vom gestörten Signalwert Y aus gesehen—waagerecht zum Zeilenende hin und ca. diagonal nach links unter verlaufen. Eine deutlich sichtbare Kernzone Z1 mit stark gestörten Bildsignalwerten verläuft dabei von ersten gestörten Bildsignalwert Y ausgehend ca. diagonal nach rechts unten. Die Intensität der Störungen nimmt hierbei im allgemeinen mit der Enternung vom ersten gestörten Bildsignalwert rasch ab. Werden bei der Prädiktion nur positive Faktoren a, b, c und d verwendet, so sind auch die Fehler der Bildsignalwerte gleichgerichtet, d.h., alle von der Störung betroffenen Bildpunkte werden einheitlich heller oder dunkler.

Der in Fig. 3 dargestellten Korrekturvorrichtung werden über einen Eingang 1 die rekonstruierten Bildsignalwerte $s_r$ (PCM-Werte) zugeführt. Der erste Eingang 61 einer Fehlerschleppenerkennung 6 ist direkt mit dem Eingang 1 verbunden, während ein zweiter Eingang 62 der Fehlerschleppenerkennung über einen Bildspeicher 2 an den Eingang 1 angeschaltet ist. Der Eingang 1 ist außerdem über einen ersten Laufzeitspeicher 3 mit einem Eingang eines Umschalters 5 verbunden, an dessen Ausgang 8 die korrigierten Bildsignalwerte $s_c$ abgegeben werden. Der Ausgang des Bildspeichers ist außerdem über einen zweiten Laufzeitspeicher 4, der dieselbe Laufzeit $\tau_1$ wie der erste Laufzeitspeicher 3 aufweist, mit den zweiten Eingang des Umschalters 5 verbunden. Der Umschalter 5 wird über einen Steuerausgang 63 der Fehlerschleppenerkennung 6 gesteuert.

Es wird zunächst angenommen, daß der Bildspeicher 2 die Laufzeit eines kompletten Fernsehbildes aufweist. An den beiden Eingängen 61 und 62 der Fehlerschleppenerkennung liegen damit die einander entsprechenden Bildsignalwerte zweier aufeinanderfolgender Fernsehbilder an. Da die geometrische Struktur der Fehlerschleppe aufgrund des verwendeten Prädiktionsverfahrens bekannt ist, kann die Fehlerschleppenerkennung 6 Störungen leicht ausmachen. Um Fehlentscheidungen zu vermeiden, werden auch die von einer Störung nicht betroffenen Bildsignalwerte bewertet um die Vortäuschung einer Fehlerschleppe aufgrund eines Wechsels des Bildmotivs zu vermeiden. Wurde jedoch eine Fehlerschleppe sicher erkannt, so wird der Umschalter aus der in Fig. 3 dargestellten Lage an den Ausgang des zweiten Laufzeitspeichers 4 geschaltet. Hierdurch werden die gestörten Bildsignalwerte durch die ungestörten Bildsignalwerte des vorangegangenen Fernsehbildes ersetzt. Die Laufzeit der Laufzeitspeicher 3 und 4 entspricht der Verarbeitungszeit der Fehlerschleppenerkennung 6. Je nach Schaltungsaufwand können durch die Fehlerschleppenerkennung 6 die gestörten Bildsignalwerte, nur die gestörten Bildsignalwerte der Kernzone Z1 oder ganze Fernsehzeilen bis hin zum gesamten Fernsehbild bzw. Fernsehhalbbild ersetzt werden.

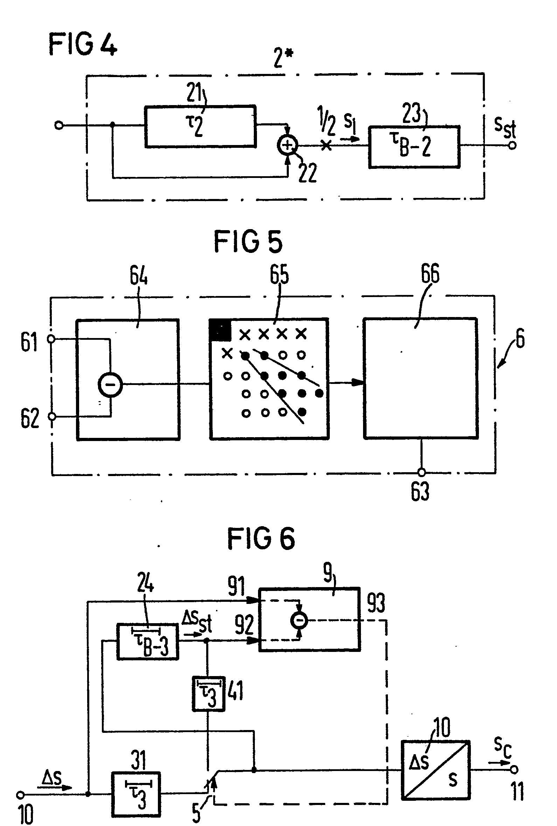

Es ist in den meisten Fällen ausreichend, daß die Luftzeit des Bildspeichers 2 der Dauer eines Fernsehhalbbildes entspricht, da im allgemeinen die Bildsignalwerte von aufeinanderfolgenden Fernsehzeilen nur wenig voneinander abweichen. Eine Verbesserung der Bildqualität wird durch Interpolation erreicht, in einem besonders einfachen Fall durch die Verwendung eines in Fig. 4 dargestellten Bildspeichers 2* realisiert. Dieser Bildspeicher enthält ein Laufzeitglied 21, das die Laufzeit $\tau_2$ einer Fernsehzeile aufweist. Eingang und Ausgang dieses Laufzeitgliedes sind über einen Addierer mit dem Eingang eines weiteren Laufzeitgliedes 23 verbunden, dessen Laufzeit $\tau_{B-2}$ bis auf eine Fernsehzeile der Dauer eines Fernsehbildes entspricht.

Jeweils zwei übereinanderliegende Bildsignalwerte zweier aufeinanderfolgender Fernsehzeilen werden linear interpoliert um anschließend als Interpolationswert $s_i$ in den Laufzeitspeicher 23 eingespeichert zu werden. Der Faktor 1/2 wird hierbei durch entsprechend Verdrahtung zwischen dem Ausgang des Addierers 22 und dem Eingang des Laufzeitgliedes 23 realisiert. Selbstverständlich kann auch eine aufwendigere Interpolation ähnlich der zur Ermittlung des Schätzwertes durchgeführt werden.

Bei einer praktischen Ausführung ist der erste Laufzeitspeicher 3 zweckmäßigerweise als Teil des Bildspeichers 2 ausgebildet. Außerdem ist es zweckmäßig, an Stelle der als gestört erkannten Bildsignalwerte ungestörte Korrekturwerte—d.h. die bereits gespeicherten Bildsignalwerte $s_{st}$—erneut in den Bildspeicher einzuschreiben.

Die Fehlerschleppenerkennung soll zunächst näher erläutert werden. Ihre Realisierung bereitet einem Fachmann weitaus weniger Schwierigkeiten als andere Probleme einer Objekt- oder Zeichenerkennung, da die geometrische Struktur der Fehlerschleppe aufgrund des gewälten Prädiktionsverfahrens bekannt ist, alle Störungen gleich gerichtet sind und ebenso der Zusammenhang zwischen den Fehlergrößen der verschiedenen Bildsignalwerte bekannt ist.

Die in Fig. 5 dargestellte Fehlerschleppenerkennung enthält eine Subtraktionsschaltung 64 mit den Eingängen 61 und 62. An den Ausgang der Subtraktionsschaltung 64 ist eine Strukturanalyseschaltung 65 angeschaltet, die im wesentlichen aus Speichern für mehrere Fernsehzeilen besteht. An den Ausgang der Strukturanalyseschaltung ist eine Auswerte- und Steuerlogik 66 angeschaltet, die über den Steuerausgang 63 den Umschalter 5 in Fig. 3 betätigt.

In die Strukturanalyseschaltung wird ständig die Differenz zwischen den Bildsignalwerten von

zwei aufeinanderfolgenden Fernsehbildern eingeschrieben. Um eine Fehlerschleppe zu erkennen, braucht im einfachsten Fall nur die Überprüfung der Vorzeichen der Differenzen innerhalb der gestörten Kernzone Z1 zu erfolgen, zweckmäßigerweise unterstützt durch einen Vergleich der Differenzen von ungestörten Bildsignalwerten. Sind beide Vergleiche positiv, d.h. alle Vorzeichen der Differenzen innerhalb der Fehlerschleppe gleich und die Differenzen außerhalb der Fehlerschleppe ungefähr oder gleich Null, so werden beispielsweise die gestörten Fernsehzeilen durch ungestörte Fernsehzeilen ersetzt. Bei der Strukturanalyseschaltung sind zahlreiche Varianten nötig. Es ist beispielsweise nicht notwendig, die Differenzen für die gesamten Fernsehzeilen zwischenzuspeichern, es ist ebenso eine Signalverarbeitung möglich, bei der jeweils nacheinander nur jeweils eine Differenz der Bildsignalwerte innerhalb der gestörten Kernzone in einer Rechenschleife überprüft wird.

In Fig. 6 ist eine Korrekturvorrichtung dargestellt, der DPCM-Signalwerte $\Delta s$ zugeführt werden und die gestörte DPCM-Signalwerte durch ungestörte zwischengespeicherte DPCM-Signalwerte ersetzt. Der Eingang 10 dieser Korrektureinrichtung ist direkt mit einem ersten Eingang 91 einer Fehlererkennung 9 verbunden und über ein Laufzeitglied 31, einen Umschalter 5 und einen Bildspeicher 24 mit einem zweiten Eingang 92 der Fehlererkennung 9 verbunden. Der Ausgang des Bildspeichers 24 ist außerdem über ein Laufzeitglied 41 mit einem zweiten Eingang des Umschalters 5, an dessen Ausgang ein DPCM-Decoder 10 angeschaltet ist, an dessen Ausgang 11 die korrigierten Bildsignalwerte $s_c$ abgegeben werden. Der Umschalter 5 wird über den Steuerausgang 93 der Fehlererkennung 9 betätigt.

Die Funktion der in Fig. 6 dargestellten Korrekturanordnung entspricht weitgehend der Korrekturanordnung nach Fig. 3. Hier werden jedoch die DPCM-Signalwerte $\Delta s$ aufeinanderfolgender Fernsehbilder oder Fernsehhalbbilder direkt miteinander verglichen und bei Feststellung eines gestörten DPCM-Signalwertes wird dieser durch einen zwischengespeicherten Korrekturwert aus dem Bildspeicher 24 ersetzt. Die Laufzeit $\tau_3$ der Laufzeitglieder 31 und 41 entspricht wiederum der Verarbeitungszeit der Fehlererkennung 9. Wie bereits vorstehend beschrieben wird anstelle eines gestörten DPCM-Signalwertes der in dem Bildspeicher 24 zwischengespeicherte DPCM-Signalwert $\Delta s_{st}$ erneut über den Umschalter 5 in den Bildspeicher 24 eingeschrieben. Die Laufzeit $\tau_{B-3}$ (bzw. Speicherkapazität) des Bildspeichers 24 entspricht bis auf die Laufzeit $\tau_3$ der Dauer eines Fernsehbildes bzw. der eines Fernsehhalbbildes. Die Fehlererkennung ist noch einfacher als die Fehlerschleppenerkennung zu realisieren. Bei einer einzigen Abweichung der DPCM-Werte zweier aufeinanderfolgender Fernsehbilder bzw. Fernsehhalbbilder bei gleichbleibenden angrenzenden DPCM-Signalwerten kann ein Übertragungsfehler mit großer Sicherheit angenommen weren und eine Korrektur durch Verwendung des entsprechenden zwischengespeicherten DPCM-Wertes erfolgen. Als angrenzende DPCM-Signalewerte sollten auch jeweils der auf den gestörten DPCM-Wert y folgende Signalwert und der DPCM-Signalwert unterhalb y überprüft werden. Ebenso kann eine Interpolation der DPCM-Werte und deren Zwischenspeicherung entsprechend der Interpolation für Bildsignalwerte durchgeführt werden.

Vom Schaltungsaufwand abgesehen, ist es zunächst gleichgültig, ob die Korrektur in der PCM- oder in der DPCM-Ebene vorgenommen wird, da die DPCM-Signalwerte gewissermaßen eine Ableitung der Bildsignalwerte darstellen. Je nach der Möglichkeit des Auftretens von Fehler wird man eine Korrektur der DPCM-Signalwerte oder der Bildsignalwerte vornehmen. Selbstverständlich ist es ebenfalls möglich beispielsweise eine Fehlererkennung durch Überprüfung der Bildsignalwerte vorzunehmen und eine Korrektur der DPCM-Signalwerte und umgekehrt zu kombinieren.

## Patentansprüche

1. Verfahren zur Korrektur von Bildfehlern bei der Übertragung von mittels mehrdimensionaler Prädiktion ermittelten und DPCM-codierten Bildsignalen, bei dem die gestörten empfangenen Bildsignalwerte ($s_r$) durch zwischengespeicherte Bildsignalwerte ($s_{st}$) ersetzt werden, dadurch gekennzeichnet, daß empfangsseitig jeweils zwischen aktuellen Bildsignalwerten ($s_r$) und den entsprechenden zwischengespeicherten Bildsignalwerten ($s_{st}$) eines vorangegangenen Fernsehbildes oder Fernsehhalbbildes Differenzen gebildet werden, daß eine Strukturanalyse der Differenzen durchgeführt wird, bei der für die Dauer membranener Zeilen überprüft wird, ob eine dem verwendeten Prädiktionsalgorithmus entsprechende Fehlerschleppe vorliegt und daß bei dem Vorliegen einer solchen Fehlerschleppe nur die gestörten Bildsignalwerte ersetzt werden.

2. Verfahren nach Anspruch 1, dadurch gekennzeichnet, daß zusätzlich ein Vergleich der an eine Fehlerschleppe angrenzenden Bildsignalwerte ($s_r$) mit den entsprechenden Bildsignalwerten ($s_{st}$) des vorangegangenen Fernsehbildes oder Fernsehhalbbildes durchgeführt wird und daß eine Korrektur nur bei zumindest nahezu unveränderten angrenzenden Bildsignalwerten durchgeführt wird.

3. Verfahren nach Anspruch 1 oder 2, dadurch gekennzeichnet, daß durch Interpolation aus aneinander angrenzenden Bildsignalwerten ($s_r$) gewonnene Interpolationswerte ($s_i$) zwischengespeichert werden.

4. Verfahren nach einem der vorhergehenden Ansprüche, dadurch gekennzeichnet, daß nur die gestörten Bildsignalwerte innerhalb der Fehlerschleppe korrigiert werden.

5. Verfahren nach einem der Ansprüche 1 bis 3, dadurch gekennzeichnet, daß nur die stärker gestörten Bildsignalwerte ($s_r$) innerhalb der Kernzone (Z1) einer Fehlerschleppe ersetzt werden.

6. Verfahren zr Korrektur von Bildfehlern bei der Übertragung mittels mehrdimensionaler Prädiktion ermittelten und DPCM-codierten Bildsignalen, bei dem die gestörten empfangenen Bildsignalwerte (s$_r$) durch zwischengespeicherten Bildsignalwerte (s$_{st}$) ersetzt werden, dadurch gekennzeichnet, daß empfangsseitig die aktuellen DPCM-Signalwerte (Δs) mit zwischengespeicherten DPCM-Signalwerten (Δs$_{st}$) des vorangegangenen Fernsehbildes/Fernsehhalbbildes oder durch Interpolation gewonnenen DPCM-Signalwerten des vorangegangenen Fernsehhalbbildes verglichen werden und bei einer einzigen Abweichung der verglichenen DPCM-Signalwerte—bei gleichbleibenden angrenzenden DPCM-Signalwerten auch in vorangegangenen Fernschreife-—nur die gestörten Bildsignalwerte (s$_r$) ersetzt werden.

7. Verfahren nach einem der vorhergehenden Ansprüche, dadurch gekennzeichnet, daß anstelle eines gestörten empfangenen DPCM-Sugnalwertes (Δs) der entsprechende zwischengespeicherte DPCM-Signalwert (Δs$_{st}$) einem DPCM-Decoder (10) zugeführt wird.

8. Verfahren nach einem der vorhergehenden Ansprüche, dadurch gekennzeichnet, daß anstelle eines gestörten DPCM-Signalwertes (Δs) oder Bildsignalwertes (s$_r$) der entsprechende zwischengespeicherte DPCM-Signalwert (Δs$_{st}$) oder der entsprechende Bildsignalwert (s$_{st}$) eines vorangegangenen Fernsehbildes oder Fernsehhalbbildes erneut zwischengespeichert wird.

9. Verfahren nach einem der Ansprüche 1 bis 3, dadurch gekennzeichnet, daß jeweils ein komplettes Fernsehbild oder Fernsehhalbbild durch ein zwischengespeicherte Fernsehbild oder Fernsehhalbbild ersetzt wird.

## Revendications

1. Procédé de correction de défauts d'images lors de la transmission de plusieurs signaux d'images déterminés au moyens d'une prédiction multidimensionnelle et codés selon le codage MICD, et selon lequel on remplace les valeurs perturbées reçues (s$_r$) du signal d'image par des valeurs mémorisées temporairement (s$_{st}$) du signal d'image, caractérisé par le fait que, côté réception, on forme des différences respectivement entre des valeurs réelles (s$_r$) du signal d'image et des valeurs mémorisées temporairement correspondantes (s$_{st}$) du signal d'image d'une image ou d'une trame précédente de télévision, qu'on effectue une analyse de structure des différences, lors de laquelle on vérifie, sur la durée de plusieurs lignes, si une suite de défauts, qui correspond à l'algorithme de prédiction utilisé, est présente, et que dans le cas de la présence d'une telle suite de défauts, seules les valeurs perturbées du signal d'image sont remplacées.

2. Procédé suivant la revendication 1, caractérisé par le fait qu'on exécute en outre une comparaison entre les valeurs (s$_r$) du signal d'image, qui sont voisines d'une suite de défauts, et les valeurs correspondantes (s$_{st}$) du signal d'image correspondant à l'image ou à la trame de télévision précédente, et qu'une correction n'est exécutée que dans le cas de valeurs du signal d'image adjacentes au moins approximativement inchangées.

3. Procédé suivant la revendication 1 ou 2, caractérisé par le fait qu'on mémorise temporairement des valeurs d'interpolation (s$_i$) obtenues par interpolation à partir de valeurs (s$_r$) du signal d'image, qui sont adjacentes les unes aux autres.

4. Procédé suivant l'une des revendications précédentes, caractérisé par le fait qu'on ne corrige que les valeurs pertubées du signal d'image à l'intérieur d'une suite de défauts.

5. Procédé suivant l'une des revendications 1 à 3, caractérisé par le fait qu'on ne remplace que les valeurs les plus fortement perturbées (s$_r$) du signal d'image à l'intérieur de la zone centrale (Z1) d'une suite de défauts.

6. Procédé de correction de défauts d'images lors de la transmission de plusieurs signaux d'images déterminés au moyen d'une prédiction multidimensionnelle et codés selon le codage MICD, et selon lequel on remplace les valeurs perturbées reçues (s$_r$) du signal d'image par des valeurs mémorisées temporairement (s$_{st}$) du signal d'image, caractérisé par le fait que, côté réception, on compare les valeurs actuelles (Δs) du signal MICD aux valeurs mémorisées temporairement (Δs$_{st}$) du signal MICD de l'image/la trame de télévision précédente ou bien à des valeurs du signal MICD, obtenues par interpolation, de la trame de télévision précédente, et que dans le cas d'un seul écart entre les valeurs comparées du signal MICD -dans le cas où des valeurs adjacentes permanentes du signal MICD sont présentes également dans la ligne de télévision précédente- on ne remplace que les valeurs perturbées (s$_r$) du signal d'image.

7. Procédé suivant l'une des revendications précédentes, caractérisé par le fait qu'on envoie à un décodeur MICD (10) la valeur mémorisée temporairement correspondante (Δs$_{st}$) du signal MICD, à la place d'une valeur perturbée reçue (Δs) du signal MICD.

8. Procédé suivant l'une des revendications précédentes, caractérisé par le fait qu'à la place d'une valeur perturbée (Δs) du signal MICD ou d'une valeur perturbée (s$_r$) du signal d'image on mémorise à nouveau temporairement la valeur mémorisée temporairement correspondante (Δ$_{st}$) du signal MICD ou la valeur correspondante (s$_{st}$) du signal d'image correspondant à une image ou trame de télévision précédente.

9. Procédé suivant l'une des revendications 1 à 3, caractérisé par le fait qu'on remplace respectivement une image ou une trame de télévision complète par une image ou une trame de télévision mémorisée temporairement.

## Claims

1. Method for correcting picture errors when transmitting picture signals which are recognized by means of multi dimensional prediction and are DPCM-coded, in which the adulterated picture signal values ($s_r$) received are replaced by intermediately stored picture signal values ($s_{st}$), characterized in that, on the receive side, differences are formed in each case between current picture signal values ($s_r$) and the corresponding intermediately stored picture signal values ($s_{st}$) of a preceding television picture or television half-frame, in that a structural analysis of the differences is carried out in which, for the duration of several lines, it is checked whether an error trail corresponding to the prediction algorithm used is present, and in that, in the case of such an error trail being present, only the adulterated picture signal values are replaced.

2. Method according to Claim 1, characterized in that, in addition, a comparison is carried out between the picture signal values ($s_r$) adjacent to an error trail and the corresponding picture signal values ($s_{st}$) of the preceding television picture or television half-frame, and in that a correction is only carried out with a least almost unchanged adjacent to picture signal values.

3. Method according to Claim 1 or 2, characterized in that interpolation value ($s_i$) gained by means of interpolation of mutually adjacent picture signal values ($s_r$) are intermediately stored.

4. Method according to one of the preceding Claims, characterized in that only the adulterated picture signal values within the error trail are corrected.

5. Method according to one of Claims 1 to 3, characterized in that only the heavily adulterated picture signal values ($s_r$) within the core zone (Z1) of an error trail are replaced.

6. Method for correcting picture errors when transmitting picture signals which are recognized by means of multidimensional prediction and DPCM-coded, in which the adulterated picture signals received ($s_r$) are replaced by intermediately stored picture signal values ($s_{st}$), characterized in that, on the receive side, the current DPCM signal values ($\Delta s$) are compared with intermediately stored DPCM signal values ($\Delta s_{st}$) of the preceding television picture/television half-frame or with DPCM signal values, gained by interpolation, of the preceding television half-frame, and in the case of a single deviation of the compared DPCM signal values—with constant adjacent DPCM signal values, also in the preceding television picture line—only the adulterated picture signal values ($s_r$) are replaced.

7. Method according to one of the preceding Claims, characterized in that, instead of an adulterated received DPCM signal value ($\Delta s$), the corresponding intermediately stored DPCM signal value ($\Delta s_{st}$) is fed to a DPCM decoder (10).

8. Method according to one of the preceding Claims, characterized in that, instead of an adulterated DPCM signal value ($\Delta s$) or picture signal value ($s_r$), the corresponding intermediately stored DPCM signal value ($\Delta s_{st}$) or the corresponding picture signal value ($s_{st}$) of a preceding television picture or television half-frame is again intermediately stored.

9. Method according to one of Claims 1 to 3, characterized in that, in case a complete television picture or television half-frame is replaced by an intermediately stored television picture or television half-frame.

FIG 1

```
×   ×   ×   ×   ×
×   B   C   D   ×
×   A   X   ×   ×
```

FIG 2

FIG 3

## FIG 4

## FIG 5

## FIG 6